# FASCICULE DE BREVET EUROPEEN

(11) **EP 3 607 652 B1**
(45) Date de publication et mention de la délivrance du brevet: **03.11.2021**
(21) Numéro de dépôt: 18737648.8
(22) Date de dépôt: 05.02.2018
(51) Int. Cl.: H02S 40/00, F24C 7/10, F24S 20/30

(54) **PLAQUE CHAUFFANTE SOLAIRE**
SOLARKOCHPLATTE
SOLAR HOTPLATE

(30) Priorité: 06.03.2017 FR 1770214
(43) Date de publication de la demande: 12.02.2020
(73) Titulaire: Zambo Bedos, Simplice, 91230 Montgeron (FR)
(72) Inventeur: Zambo Bedos, Simplice, 91230 Montgeron (FR)
(74) Mandataire: Tzeuton Tchangoum, Eric Olivier
(86) Numéro de dépôt international: PCT/FR2018/000014
(87) Numéro de publication internationale: WO 2018/162807

(56) Documents cités:
- WO-A1-2009/039925
- DE-A1-102008 013 117
- US-A1- 2006 000 501
- US-A1- 2008 110 870
- US-A1- 2015 155 414
- US-B1- 6 914 221

## Description

La présente invention concerne un dispositif de plaque chauffante.

On connaît de l'état de l'art des dispositifs de plaques chauffantes qui sont alimentés par le réseau électrique. Toutefois, si le réseau électrique est absent ou défaillant, les plaques chauffantes existantes ne fonctionnent plus.

En outre, US6914221B1 suggère un dispositif de plaque chauffante sur un chariot, où la plaque chauffante peut être alimentée par une source de puissance disposée sur le chariot, pouvant comprendre des cellules photovoltaïques.

De plus, WO2009039925A1 propose un dispositif de chauffage de nourriture de forme ovoïde comprenant une base forme de coupole ayant une surface chauffante et un couvercle amovible forme de coupole refermant la base, le couvercle ayant une surface ayant des cellules photovoltaïques ou d'autres éléments électroniques.

L'invention vise à palier aux inconvénients de l'art antérieur, et à proposer un dispositif compact, dont le corps de dispositif parallélépipédique est sensiblement plan.

A cet effet, l'invention a pour objet un dispositif de plaque chauffante solaire selon les revendications, qui fonctionne sans que le réseau électrique soit nécessaire.

En annexe ci-joint :

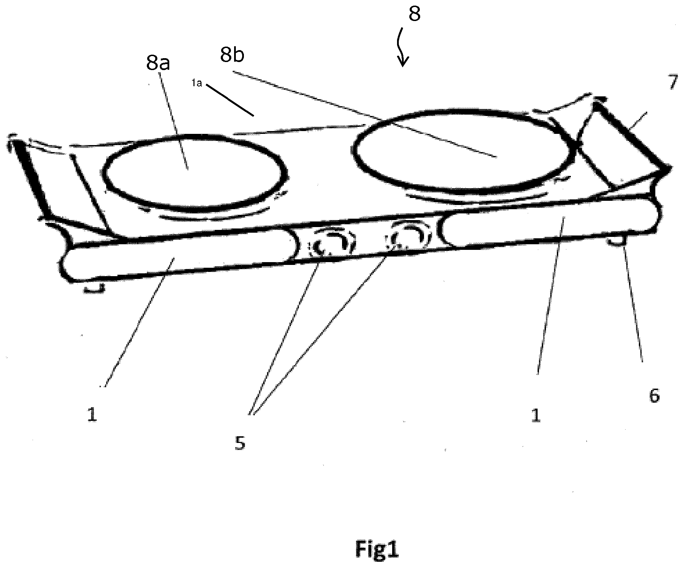

La figure 1 est une vue schématique du dispositif de plaque chauffante solaire selon l'invention.

En référence à la figure 1, le dispositif de plaque chauffante 8 comprend deux plaques 8a, 8b : une petite 8a et une grande 8b. Comme on peut le voir sur la figure 1, 25 le dispositif de plaque chauffante 8 comprend un corps la sur lequel est disposé les plaques chauffantes 8a et 8b. Le corps la illustré est parallélépipédique et sensiblement plan.

Le dispositif de plaque chauffante comprend plusieurs panneaux solaires 1 intégrés permettant de capter au maximum les rayons du soleil pour chauffer rapidement la plaque en utilisant le principe de la concentration des rayons. Toute l'énergie du soleil se concentre sur le dispositif de plaque chauffante solaire 8.

La finition est en acier inoxydable durable facilitant le nettoyage. Le dispositif 8 inclut une protection anti-surchauffe.

Le dispositif 8 est résistant à la corrosion. L'ajustement de la chaleur est contrôlé par un thermostat 5. Les indications de puissance sont faites par un néon individuel. Le dispositif 8 inclut des pieds 6 en caoutchouc antidérapants pour protéger la surface de la chaleur. Des poignées 7 sont incluses et permettent de garantir la sécurité de l'utilisateur. Les pieds antidérapants 6 garantissent la stabilité du dispositif de plaque chauffante solaire 8 et un espace supplémentaire est prévu en-dessous des plaques 8a, 8b, et permet une meilleure dissipation de la chaleur. Les plaques 8a, 8b sont en fonte, et chauffent en état ON et refroidissent en état OFF en peu de temps. Le thermostat 5 est variable pour vous laisser le contrôle de la température.

Le dispositif 8 est parfaitement adapté aux cuissons les plus vives comme aux cuissons à grands volumes ou aux plats longuement mijotés. N'engendrant pas de dégagement de fumée, ni de C02, vous permettant d'utiliser une énergie gratuite, Ecologique, Economique, le dispositif de plaque chauffante solaire 8 s'inscrit sans conteste dans la voie du développement durable.

### CONTENU DU DIPOSITIF DE PLAQUE CHAUFFANTE SOLAIRE 8

(1) Au moins un panneau solaire 12 Volts intégré 1 ;
(2) En son sein batterie rechargeable de 12 Volts ;
(3) En son sein régulateur économique 4 Ampères 12 Volts ;
(4) En son sein convertisseur de tension 12V/230V ;
(1.1) -Tension nominale d'entrée : 12V ;
(4.1) -Tension de sortie : 220-230 V ;
Température de fonctionnement : -15 (avec la batterie) à 45°C ;
Protection surchauffe : oui ;
Protection surcharge : oui.

### Fonctionnalités :

Les plaques 8a, 8b sont en fonte d'acier massive dont le diamètre est de 18,8 cm pour la grande plaque 8b et 16,2 cm pour la petite plaque 8a. La puissance maximale est de 2500W.

La puissance de la grande plaque 8a est de 1500W. La puissance de la petite plaque 8b est de 1000W.

La finition est en acier inoxydable durable facilitant le nettoyage. Le dispositif 8 inclut une protection anti-surchauffe, et est résistant à la corrosion. L'ajustement de la chaleur est contrôlé par le thermostat 5. Il inclut des indications de puissance par un néon individuel. Les pieds 6 en caoutchouc antidérapants sont prévus pour protéger la surface de la chaleur. Les poignées 7 incluses permettent de garantir la sécurité de l'utilisateur. Les pieds antidérapants 6 garantissent la stabilité du dispositif de plaque chauffante solaire et l'espace supplémentaire en-dessous des plaques 8a, 8b permet une meilleure dissipation de la chaleur. Les plaques 8a, 8b sont en fonte et chauffent et refroidissent rapidement et efficacement. Le thermostat est variable pour vous laisser le contrôle de la température.

## Revendications

1. Dispositif de plaque chauffante solaire (8) comportant :
- un corps de dispositif (1a) parallélépipédique ;
- au moins une plaque chauffante (8a, 8b) montée sur le corps (1a) ;
- au moins un panneau solaire (1) ; ledit panneau solaire (1) étant intégré au corps de dispositif (1a), et le corps de dispositif (1a) comportant en outre
- en son sein une batterie rechargeable (1b) ; et
- en son sein un convertisseur de tension de préférence de 12 v à 220-230v, **caractérisé en ce que** ledit corps de dispositif (1a) parallélépipédique est sensiblement plan.

2. Dispositif de plaque chauffante solaire (8) selon la revendication précédente, **caractérisé en ce qu'**il comprend en outre en son sein un régulateur économique de 4 Ampères à 12Volts.

3. Dispositif de plaque chauffante solaire (8) selon l'une des revendications précédentes, **caractérisé en ce qu'**il comprend plusieurs panneaux solaires (1) intégrés.

4. Dispositif de plaque chauffante solaire (8) selon l'une des revendications précédentes, comprenant des pieds (6) définissant un espace supplémentaire en-dessous du corps de dispositif (1a) l'espace étant configuré pour permettre une meilleure dissipation de la chaleur de ladite plaque (8a, 8b).

5. Dispositif de plaque chauffante solaire (8) selon l'une des revendications précédentes, **caractérisé en ce qu'**il comporte deux plaques en fonte qui chauffent en état ON et refroidissent en peu de temps en état OFF.

6. Dispositif de plaque chauffante solaire (8) selon l'une des revendications précédentes, **caractérisée en ce qu'**il comporte un thermostat (5) pour contrôler la température de chauffe.

7. Dispositif de plaque chauffante solaire (8) selon l'une des revendications précédentes,! **caractérisée en ce qu'**il comporte une protection anti - surchauffe résistant à la corrosion.

8. Dispositif de plaque chauffante solaire (8) selon l'une des revendications précédentes, **caractérisée en ce qu'**il comporte une protection contre la surcharge.

9. Dispositif de plaque chauffante solaire (8) selon l'une des revendications précédentes, **caractérisée en ce qu'**il comporte une indication de puissance par néon individuel.

10. Dispositif de plaque chauffante solaire (8) selon l'une quelconque des revendications précédentes, comprenant une grande plaque (8b) et une petite plaque (8a), configuré pour définir la puissance maximum de 2500W dont la Puissance de la grande plaque (8b) est de 1500W et la puissance de la petite plaque (8a) est de 1000W.

11. Dispositif de plaque chauffante solaire (8) selon l'une quelconque des revendications précédentes, **caractérisé en ce qu'**il comporte des pieds antidérapants (6) qui garantissent la stabilité.

12. Dispositif de plaque chauffante solaire (8) selon l'une quelconque des revendications précédentes, **caractérisé en ce qu'**il comporte des poignées incluses (7) permettent de garantir la sécurité de l'utilisateur.

13. Dispositif de plaque chauffante solaire (8) selon l'une quelconque des revendications précédentes, **caractérisé en ce qu'**il comporte une finition en acier inoxydable facilitant le nettoyage.

14. Dispositif de plaque chauffante solaire (8) selon l'une quelconque des revendications **caractérisé en ce qu'**il comporte un interrupteur ON/OFF pour allumer et éteindre.

## Patentansprüche

1. Solare Heizplattenvorrichtung (8) aufweisend:
- einen quaderförmigen Vorrichtungskörper (1a);
- mindestens eine an dem Körper (1a) angebrachte Heizplatte (8a, 8b);
- mindestens ein Solarpanel (1);
wobei das Solarpanel (1) von dem Vorrichtungskörper (1a) integriert ist und der Vorrichtungskörper (la) ferner aufweist:
- in seinem Inneren eine wiederaufladbare Batterie; und
- in seinem Inneren einen Spannungswandler vorzugsweise von 12 V auf 220-230 V,
**dadurch gekennzeichnet, dass** der quaderförmige Vorrichtungskörper (1a) im Wesentlichen eben ist.

2. Solare Heizplattenvorrichtung (8) nach dem vorhergehenden Anspruch, **dadurch gekennzeichnet, dass** sie weiterhin einen sparsamen Regler von 4 Ampere bis 12 Volt umfasst.

3. Solare Heizplattenvorrichtung (8) nach einem der vorhergehenden Ansprüche, **dadurch gekennzeichnet, dass** sie mehrere integrierte Solarpanele (1) umfasst.

4. Solare Heizplattenvorrichtung (8) nach einem der vorhergehenden Ansprüche, umfassend Füße (6), die einen zusätzlichen Raum unterhalb des Vorrichtungskör-pers (1a) definieren, wobei der Raum konfiguriert ist, um eine bessere Wärmeableitung der Platte (8a, 8b) zu ermöglichen.

5. Solare Heizplattenvorrichtung (8) nach einem der vorhergehenden Ansprüche, **dadurch gekennzeichnet, dass** sie zwei Platten aus Gusseisen umfasst, die im EIN-Zustand heizen und im AUS-Zustand in kurzer Zeit abkühlen.

6. Solare Heizplattenvorrichtung (8) nach einem der vorhergehenden Ansprüche, **dadurch gekennzeichnet, dass** sie einen Thermostat (5) zur Steuerung der Heiztemperatur aufweist.

7. Solare Heizplattenvorrichtung (8) nach einem der vorhergehenden Ansprüche, **dadurch gekennzeichnet, dass** sie einen korrosionsbeständigen Überhitzungsschutz aufweist.

8. Solare Heizplattenvorrichtung (8) nach einem der vorhergehenden Ansprüche, **dadurch gekennzeichnet, dass** sie einen Überlastschutz aufweist.

9. Solare Heizplattenvorrichtung (8) nach einem der vorhergehenden Ansprüche, **dadurch gekennzeichnet, dass** sie eine Leistungsanzeige durch ein individuelles Neonlicht aufweist.

10. Solare Heizplattenvorrichtung (8) nach einem der vorhergehenden Ansprüche, umfassend eine große Platte (8b) und eine kleine Platte (8a), wobei sie konfiguriert ist, um die maximale Leistung von 2500 W zu definieren, wobei die Leistung der großen Platte ( 8b) 1500 W beträgt und die Leistung der kleinen Platte (8a) 1000 W beträgt.

11. Solare Heizplattenvorrichtung (8) nach einem der vorhergehenden Ansprüche, **dadurch gekennzeichnet, dass** sie rutschfeste Füße (6) aufweist, die Standfestigkeit gewährleisten.

12. Solare Heizplattenvorrichtung (8) nach einem der vorhergehenden Ansprüche, **dadurch gekennzeichnet, dass** sie inklusive Griffe (7) aufweist, die es ermöglichen, die Sicherheit des Benutzers zu garantieren.

13. Solare Heizplattenvorrichtung (8) nach einem der vorherigen Ansprüche, **dadurch gekennzeichnet, dass** sie eine Edelstahl-Oberfläche aufweist, die die Reinigung erleichtert.

14. Solare Heizplattenvorrichtung (8) nach einem der Ansprüche, **dadurch gekennzeichnet, dass** sie einen EIN/AUS-Schalter zum Ein- und Ausschalten aufweist.

## Claims

1. Solar hotplate device (8) comprising:
- a parallelepiped device body (1a);
- at least one hotplate (8a, 8b) mounted on the body (1a);
- at least one solar panel (1);
said solar panel (1) being integrated to the device body (1a),
and the device body (1a) further comprising
- a rechargeable battery therewithin ; and
- a voltage converter therewithin, preferably from 12 v to 220-230v,
**characterised in that** said parallelepiped device body (1a) is essentially plane.

2. Solar hotplate device (8) according to the preceding claim, **characterized in that** it further comprises an economic regulator therewithin, of 4 Amperes at 12Volts.

3. Solar hotplate device (8) according to any of the preceding claims, **characterized in that** it further comprises a plurality of integrated solar panels (1).

4. Solar hotplate device (8) according to any of the preceding claims, comprising feet (6) defining a supplementary space under the device body (1a), the space being configured to enable a better dissipation of heat from said hotplate (8a, 8b).

5. Solar hotplate device (8) according to any of the preceding claims, **characterized in that** it comprises two hotplates of cast iron, that heat up in a « on » state, and cool down in a short time in a « off » state.

6. Solar hotplate device (8) according to any of the preceding claims, **characterized in that** it comprises a thermostat (5) to command the heat temperature.

7. Solar hotplate device (8) according to any of the preceding claims, **characterized in that** it comprises an anti-overheating protection that is corrosion-resistant.

8. Solar hotplate device (8) according to any of the preceding claims, **characterized in that** it comprises an anti-overcharging protection.

9. Solar hotplate device (8) according to any of the preceding claims, **characterized in that** it comprises a power indication by an individual neon light.

10. Solar hotplate device (8) according to any of the preceding claims, comprising a big hotplate (8b) and a small hotplate (8a), configured to define a maximum power of 2500W, among which the power of the big hotplate (8b) is 1500W and the power of the small hotplate is 1000W.

11. Solar hotplate device (8) according to any of the preceding claims, **characterized in that** it comprises anti-slip feet (6) ensuring its stability.

12. Solar hotplate device (8) according to any of the preceding claims, **characterized in that** it comprises included handles (7) ensuring the safety of the user.

13. Solar hotplate device (8) according to any of the preceding claims, **characterized in that** it comprises a stainless steel finish facilitating the cleaning.

14. Solar hotplate device (8) according to any of the preceding claims, **characterized in that** it comprises an ON/OFF switch to turn on and off.
